# EUROPÄISCHE PATENTSCHRIFT

(11) **EP 3 210 802 B1**
(45) Veröffentlichungstag und Bekanntmachung des Hinweises auf die Patenterteilung: **12.12.2018**
(21) Anmeldenummer: 16157780.4
(22) Anmeldetag: 29.02.2016
(51) Int. Cl.: B60D 5/00, B61D 17/22, B62D 47/02

(54) **ÜBERGANG ZWISCHEN ZWEI GELENKIG MITEINANDER VERBUNDENER FAHRZEUGE**
CONNECTION BETWEEN TWO VEHICLES WITH JOINTED COUPLINGS
PASSAGE ENTRE DEUX VEHICULES RELIES DE MANIERE ARTICULEE

(43) Veröffentlichungstag der Anmeldung: 30.08.2017
(73) Patentinhaber: Hübner GmbH & Co. KG, 34123 Kassel (DE)
(72) Erfinder: KRUG, Uwe, 34302 Guxhagen (DE)
(74) Vertreter: Patentanwälte Walther Hinz Bayer PartGmbB

(56) Entgegenhaltungen:
- DE-U1- 29 921 498
- DE-U1-202009 010 163
- US-A- 1 891 964

## Beschreibung

Die Erfindung betrifft einen Übergang zwischen zwei gelenkig miteinander verbundener Fahrzeuge, wobei der Übergang eine Übergangseinrichtung, z. B. eine Plattform oder Brücke umfasst, die durch mindestens einen Balg tunnelartig umgeben ist, wobei im Bereich der Seitenwand des mindestens einen Balges eine balgartig ausgebildete Spaltabdeckung vorgesehen ist, wobei die Spaltabdeckung mehrere hintereinander angeordnete Spaltabdeckrahmen aufweist, wobei die Spaltabdeckrahmen zur Bildung der balgartigen Spaltabdeckung durch Stoffstreifen verbunden sind, wobei an der Spaltabdeckung eine in Richtung der Übergangseinrichtung ragende, den Abstand X zwischen Spaltabdeckung (30) und Übergangseinrichtung überbrückende Schürze (50) angebracht ist.

Zwischen zwei gelenkig miteinander verbundenen Fahrzeugen, seien es straßengebundene Fahrzeuge oder Schienenfahrzeuge, befindet sich ein sogenannter Übergang. Der Übergang setzt sich zusammen aus einem Balg und einer Übergangseinrichtung, wobei durch die Übergangseinrichtung das Hinüberwechseln von Personen zwischen den beiden Fahrzeugteilen ermöglicht wird. Der Balg umgibt zum Schutz vor Witterungseinflüssen die Übergangseinrichtung tunnelartig.

Die Übergangseinrichtung kann in den unterschiedlichsten Ausführungsformen ausgebildet sein. Bekannt sind in diesem Zusammenhang insbesondere Gliederbrücken, wie sie z. B. bei schienengebundenen Fahrzeugen eingesetzt werden, oder auch Plattformen mit kreisrunden Drehtellern, die jeweils endseitig an dem Boden des jeweiligen Fahrzeugs anschließen. Bei einer Übergangseinrichtung in Form einer Gliederbrücke besteht ein Abstand zwischen dem äußeren Rand der Gliederbrücke und dem die Gliederbrücke tunnelartig umgebenden Balg. Dieser Abstand oder Spalt kann durch eine Balgschürze abgedeckt werden, die insofern ein Stück weit über die Gliederbrücke seitlich übersteht. Bei einer Plattform ist ein Drehteller vorgesehen, wobei der Drehteller in den Bodenabschnitten der beiden einander gegenüberliegenden Fahrzeuge gelagert ist. Auch hier gibt es einen seitlichen Abstand zwischen der Seitenwand des Balges und der Plattform mit dem Drehteller. Auch hier kann insofern eine Balgschürze vorgesehen sein, die diesen Abstand oder Spalt abdeckt. Eine solche Balgschürze, die der Abdeckung des Spaltes dient, ist auch unter der Bezeichnung "Spaltabdeckung" oder "Bodenabdeckung" bekannt.

Gegenstand der EP 2 698 266 B1 ist in diesem Zusammenhang eine Balgschürze, die in Richtung der Mittellängsachse des Fahrzeugs schräg ausgerichtet den Spalt zwischen Plattform oder Brücke einerseits und der Balgseitenwand abdeckt. Wenn diese Balgschürze verschlissen ist, beispielsweise dadurch, dass die Personen, die den Übergang benutzen mit ihren Schuhen gegen die Balgschürze stoßen bzw. auch Koffer an der Balgschürze entlanggleiten, muss der Balg ausgetauscht werden, da dauerhaft verhindert werden muss, dass Personen in den durch die Schürze abgedeckten Spalt gelangen können. Insofern ist nach der EP 2 698 266 B1 vorgesehen, auf die Balgschürze eine Verschleißschicht aufzubringen. Eine solche Verschleißschicht sorgt dafür, dass die Balgschürze nicht unmittelbar beschädigt wird, sondern zunächst nur die Verschleißschicht. Diese Verschleißschicht ist austauschbar, sodass schlussendlich hierdurch die Lebensdauer des Balges signifikant erhöht wird.

Aus der EP 0 698 514 B1 ist eine Spaltabdeckung bekannt, die sich etwa über die Höhe des Drittels einer Seitenwand des Balges erstreckt und am oberen und unteren Ende mit der Seitenwand verbunden ist. Zur Verbindung mit der Seitenwand ist hierbei vorgesehen, dass die Spaltabdeckung mehrere hintereinander angeordnete Rahmen aufweist, die etwa trapezförmig gebogen sind, wobei insofern aufgrund der trapezförmigen Ausgestaltung der Rahmen in Richtung des Inneren des Übergangs der Spalt zwischen Übergangseinrichtung einerseits und Balgseitenwand abgedeckt wird. Die einzelnen Rahmen sind hierbei durch Stoffstreifen miteinander verbunden, sodass sich eine balgartige Ausgestaltung der Spaltabdeckung ergibt.

Wie bereits erläutert, sind die Rahmen der Spaltabdeckung etwa trapezförmig gehalten, wobei im unteren Bereich der Spaltabdeckung ein jeder Rahmen im Winkel von 90° zur Seitenwand geführt ist, und dort, wie bereits ausgeführt, befestigt wird. Die die einzelnen Rahmen verbindenden Stoffstreifen stehen hierbei über den unteren Teil des Rahmens, mit dem dieser horizontal in Richtung der Balgseitenwand läuft, über, wobei der Überstand so gewählt ist, dass der vertikale Spalt zwischen der Übergangseinrichtung einerseits und dem Rahmen der Spaltabdeckung andererseits im Wesentlichen abgedeckt ist. Das heißt, dass hierdurch verhindert wird, dass Personen, die den Übergang benutzen in den Bereich unterhalb der Spaltabdeckung gelangen können.

Es hat sich nun allerdings gezeigt, dass Bälge, insbesondere bei Bussen, die verhältnismäßig lang sind, auf Dauer zum Durchhängen neigen. Das heißt, in diesem Bereich, üblicherweise in der Mitte des Balges, schleift dann die Spaltabdeckung mit den überstehenden Stoffstreifen auf der Übergangseinrichtung, also z. B. der Brücke oder der Plattform. Auch bei der Montage hat sich herausgestellt, dass die Spaltabdeckung mit ihrem Stoffüberstand, wie sie aus der EP 0 698 514 B1 bekannt ist, nicht immer den gleichen Abstand zur Übergangseinrichtung in vertikaler Richtung aufweist.

Aus der DE 299 21 498 U1 ist ein Übergang der gattungsgemäßen Art bekannt. Hierbei ist ein Abdeckelement zur Abdeckung der Spurfuge zwischen dem Faltenbalg und dem Drehteller bekannt, an dem am unteren Ende ein Falten-Ansatzelement anbringbar ist.

Die der Erfindung zugrunde liegende Aufgabe besteht darin, bei einem Übergang der eingangs genannten Art mit einer Spaltabdeckung dafür zu sorgen, dass der lichte Abstand zwischen der Unterseite des Stoffüberstandes und der Oberseite der Übergangseinrichtung, also beispielsweise der Brücke oder der Plattform entsprechend den Gegebenheiten vor Ort, dass heißt, beim Einbau in das Fahrzeug anpassbar ist.

Zur Lösung der Aufgabe wird erfindungsgemäß vorgeschlagen, dass die Schürze in der Höhe verstellbar an der Spaltabdeckung angebracht ist. Hierbei kann nach einer Variante die Spaltabdeckung am Balg, insbesondere an der Seitenwand des Balges angeordnet sein. Das heißt, die Spaltabdeckung ist Bestandteil des Balges.

Die Spaltabdeckung kann nach einer zweiten Variante bei einem Übergang mit einem Innen- und einem Außenbalg durch den Innenbalg gebildet werden. Das heißt, der Innenbalg hat dann, neben anderen Funktionen, auch die Funktion der Spaltabdeckung. Die Ausbildung der Schürze ist bei beiden Varianten im Wesentlichen gleich.

Durch die Anbringung einer Schürze an der Spaltabdeckung selbst besteht die Möglichkeit, diesen vertikalen Abstand auf die vor Ort vorhandenen Gegebenheiten insbesondere in Bezug auf die Höhe anpassen zu können, bzw. es besteht auch die Möglichkeit, gegebenenfalls nachdem der Balg eine Zeit lang in Betrieb gewesen ist und sich unter Umständen gesetzt hat, durch die Veränderung der Lage der Schürze der Spaltabdeckung den lichten Abstand zwischen der Unterseite der Schürze und der Übergangseinrichtung einstellen oder nachjustieren zu können. Hierzu ist insbesondere vorgesehen, dass die Schürze lösbar an der Spaltabdeckung anbringbar ist, und vorteilhaft auch in der Höhe verstellbar an der Spaltabdeckung befestigt werden kann. Die Lösbarkeit der Schürze bedingt natürlich auch die Austauschbarkeit der Schürze bei Verschleiß. Des Weiteren kann nach Demontage der Schürze auch die Brücke oder Plattform leicht demontiert werden.

Im Einzelnen ist in diesem Zusammenhang vorgesehen, dass die Stoffstreifen der Spaltabdeckung, die in Richtung der Übergangseinrichtung einen frei auskragenden Stoffüberstand bilden, zur Anbringung der Schürze dienen. Hieraus wird auch die Möglichkeit der Nachrüstung bestehender Bälge oder Spaltabdeckungen offenbar.

Hierbei ist im Einzelnen vorgesehen, dass die Spaltabdeckung, die ebenso falten- oder wellenbalgartig ausgebildet ist, wie der Stoffüberstand, die Schürze im Bereich der Falten- oder Wellenscheitel des Stoffüberstands aufnimmt. Hieraus wird deutlich, dass die Scheitel des Stoffüberstands - hierbei werden zur Bildung eines Scheitels gegebenenfalls die Schenkel jeweils einer Falte oder Welle durch ein sogenanntes Einfassband mit den Schenkeln der benachbarten Falte oder Welle verklebt und/oder vernäht - der Anbringung der Schürze dienen. Im Einzelnen sind zur Befestigung der Schürze, die ebenfalls falten- oder wellenbalgartig ausgebildet ist, im Bereich der Scheitel der Schürze Rahmenstücke vorgesehen, die der Verbindung mit dem Stoffüberstand der Spaltabdeckung dienen, wobei die im Querschnitt U-profilförmigen Rahmenstücke die falten- oder wellenbalgartigen Stoffstreifen zur Bildung der entsprechend balgartig ausgebildeten Schürze aufnehmen. Vorteilhaft zeichnet sich die Verbindung dadurch aus, dass die Rahmenstücke die falten- oder wellenbalgartigen Stoffstreifen der Schürze im Einbauzustand in der Höhe unter Bildung eines freien Endes überragen, wobei die Rahmenstücke mit ihrem freien Ende an den Falten- oder Wellenscheiteln des Stoffüberstandes der Spaltabdeckung angeordnet sind. Hierdurch wird die Möglichkeit eröffnet, über die Länge der freien Enden der Rahmenstücke und die Länge des Stoffüberstandes die Lage der Schürze in der Höhe zu variieren, dass heißt, die Schürze an der Spaltabdeckung so anzubringen, sodass ein minimaler Abstand zwischen der Unterseite der Schürze und der Übergangseinrichtung bestehen bleibt, ohne dass die Schürze auf der Übergangseinrichtung schleift. Die Rahmenstücke, die im Querschnitt U-profilförmig ausgebildet sind, werden hierbei auf die Faltenscheitel des Stoffüberstandes aufgeklemmt oder mit diesen durch Schrauben oder Nieten verbunden. Denkbar ist allerdings auch eine andere Verbindungsart zwischen der Schürze und dem Stoffüberstand, beispielsweise durch Klettbänder.

Wie zuvor beschrieben, weist die Schürze eine ebensolche falten- oder wellenbalgartige Ausbildung auf wie die Spaltabdeckung, damit die Schürze vollflächig an der Spaltabdeckung anliegen kann. Gleiches gilt entsprechend für die Verbindung der Spaltabdeckung zur Seitenwand des Balges.

Darüber hinaus kann die Schürze mit den freien Enden der Rahmenstücke an den Spaltabdeckrahmen der Spaltabdeckung befestigt werden, falls ein solcher Stoffüberstand, aus welchen Gründen auch immer, nicht zur Verfügung steht.

Vorteilhaft sind fernerhin die Stoffstreifen der Schürze aus Gründen der Haltbarkeit aus einem verschleißfesterem Material als die Stoffstreifen der Spaltabdeckung ausgebildet.

Anhand der Zeichnungen wird die Erfindung nachstehend anhand einer faltenbalgartigen Spaltabdeckung beispielhaft näher erläutert.
- Fig. 1: zeigt ein Gelenkfahrzeug, wobei die das Fahrzeug bildenden Fahrzeugteile durch einen Übergang verbunden sind, in schematischer Darstellung;
- Fig. 2: zeigt in perspektivischer Darstellung einen Übergang mit Balg und Spaltabdeckung sowie der Plattform, wobei durch die Spaltabdeckung der Spalt zwischen Plattform einerseits und Balgseitenwand überbrückt wird;
- Fig. 3: zeigt einen Schnitt gemäß der Linie III-III aus Fig. 2;

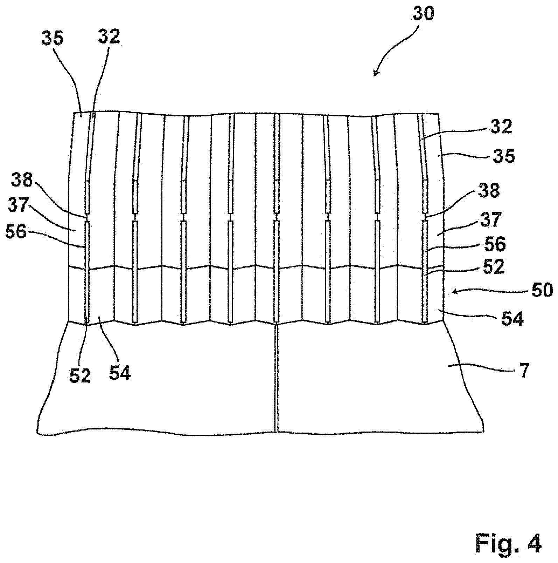

- Fig. 4: zeigt eine Ansicht auf den unteren Bereich der Spaltabdeckung.

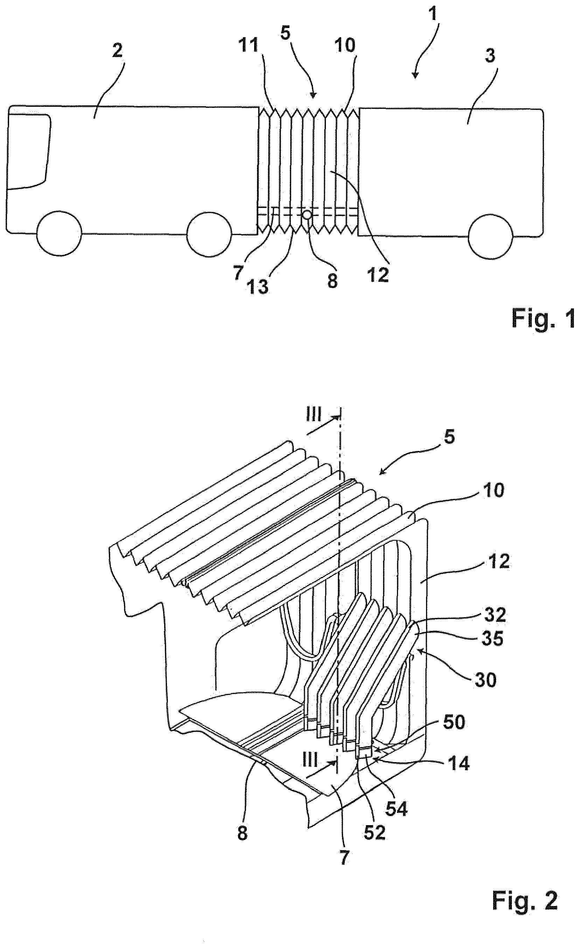

Gemäß Fig. 1 umfasst das Gelenkfahrzeug 1 die beiden Fahrzeugteile 2 und 3, wobei zwischen den beiden Fahrzeugteilen 2 und 3 der mit 5 bezeichnete Übergang angeordnet ist. Der Übergang 5 umfasst den Faltenbalg 10, der die Übergangseinrichtung, beispielsweise eine Plattform 7 tunnelartig umgibt. Unterhalb der Übergangseinrichtung 7 befindet sich das schematisch angedeutete Gelenk 8. Der Faltenbalg 10 umfasst die Balgdecke 11 sowie zwei Seitenwände 12 und das Bodenteil 13, sodass im vorliegenden Fall auch das Gelenk 8 durch den Balg vor Witterungseinflüssen geschützt ist.

Fig. 2 zeigt den Übergang 5 in perspektivischer Darstellung, wobei deutlich erkennbar an der Balgseitenwand 12 die Spaltabdeckung 30 angeordnet ist. Erkennbar ist ebenfalls die Übergangseinrichtung in Form einer Plattform 7, wobei der Spalt, der die Spaltabdeckung 30 überbrückt, das Bezugszeichen 14 aufweist. Die Spaltabdeckung 30 ist ebenso wie der Faltenbalg 10 faltenbalgartig ausgebildet, sodass die Falten der Spaltabdeckung in die Falten der Seitenwand des Faltenbalges 10 eingreifen.

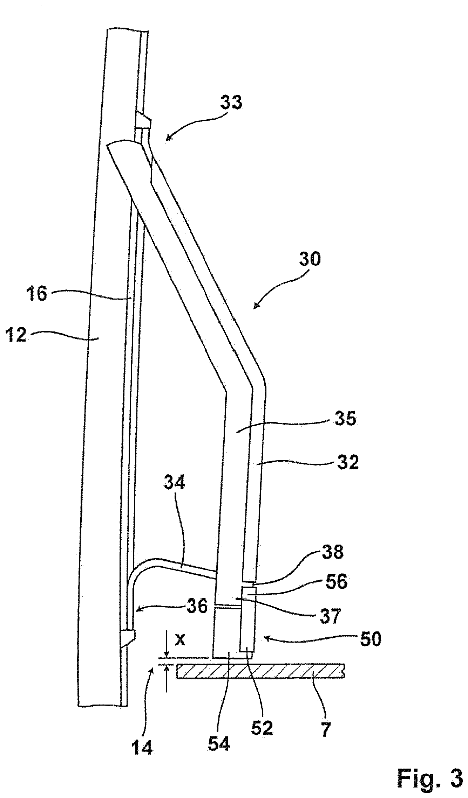

Fig. 3 zeigt den Schnitt gemäß der Linie III-III aus Fig. 2, wobei die Balgseitenwand 12 in Bezug auf jede Falte jeweils einen Balgrahmen 16 aufweist.

Aus Fig. 3 ist nun die Ausbildung der faltenbalgartigen Spaltabdeckung 30 und deren Anbringung an den Balgrahmen 16 der Balgseitenwand 12 im Einzelnen erkennbar. Die Spaltabdeckung 30 umfasst mehrere hintereinander angeordnete Spaltabdeckrahmen 32. Die Spaltabdeckrahmen 32 sind in der Ansicht in etwa trapezförmig ausgebildet. Das obere Ende des Spaltabdeckrahmens 32 ist mit dem Balgrahmen 16 verbunden (Pfeil 33). Im unteren Bereich sind unter Bildung eines im Wesentlichen horizontalen Schenkels 34 die Spaltabdeckrahmen mit den Balgrahmen 16 verbunden (Pfeil 36). Die Spaltabdeckrahmen 32 nehmen darüber hinaus Stoffstreifen 35 auf, die faltenbalgartig ausgebildet sind, sodass diese in die Falten der Seitenwand 12 des Faltenbalges 10 eingreifen können, wie sich dies in Anschauung von Fig. 2 ergibt. Im Bereich des horizontalen Schenkels 34 weisen die Stoffstreifen 35 einen Stoffüberstand 37 auf, an dem die mit 50 bezeichnete Schürze anbringbar ist. Der Stoffüberstand 37 ist hierbei ebenfalls faltenbalgartig ausgebildet, und besitzt die Faltenscheitel 38. An diesen Faltenscheiteln 38 wird die Schürze 50 befestigt. Hierzu weist eine jede Falte der Schürze 50 ein Rahmenstück 52 auf, das heißt, die einzelnen Rahmenstücke 52 sind durch ebenfalls faltenbalgartig ausgebildete Stoffstreifen 54 zur Bildung einer faltenbalgartigen Schürze 50 miteinander verbunden. Das Rahmenstück 52 besitzt hierbei ein freies Ende 56, wobei das Rahmenstück 52 mit dem freien Ende an dem Faltenscheitel 38 des Stoffüberstandes 37 der Spaltabdeckung 30 befestigt werden kann. Befestigbar ist das im Querschnitt in etwa U-förmig ausgebildete Rahmenstück an dem jeweiligen Faltenscheitel 38, beispielsweise durch Nieten, Schrauben oder auch durch Krimpen (Klemmen). Insbesondere durch eine Schraub-, Niet- oder Klemmverbindung, ist die Schürze 50 lösbar mit dem Stoffüberstand 37 verbunden. Durch die Lösbarkeit einerseits und die Einstellbarkeit andererseits, bedingt durch das frei überstehende Ende eines jeden Rahmenstücks 52, wird deutlich, dass der Abstand X zwischen der Unterseite der Schürze 50 und der Oberseite der Plattform 7 immer dann neu eingestellt werden kann, wenn sich beispielsweise der Balg gesetzt hat (Fig. 3). Grundsätzlich wird aber auch die Erstmontage erleichtert, indem nämlich unmittelbar durch Veränderung der Lage des freien Endes 56 des Rahmenstückes 52 an dem Stoffüberstand der gewünschte Abstand X zwischen der Unterseite der Schürze und der Oberseite der Plattform eingestellt werden kann. Da die Schürze 50 abnehmbar ist, wird auch die Möglichkeit eröffnet, die Plattform 7 leicht demontieren zu können. Ebenfalls besteht die Möglichkeit der Nachrüstung vorhandener Spaltabdeckungen, auch wenn gegebenenfalls der Stoffüberstand an der Spaltabdeckung gekürzt werden muss.

### Bezugszeichenliste:

- 1: Gelenkfahrzeug
- 2: Fahrzeugteil
- 3: Fahrzeugteil
- 5: Übergang
- 7: Plattform
- 8: Gelenk
- 10: Faltenbalg
- 11: Balgdecke
- 12: Seitenwand
- 13: Bodenteil
- 14: Spalt
- 16: Balgrahmen
- 30: Spaltabdeckung
- 32: Spaltabdeckrahmen
- 33: Pfeil
- 34: Schenkel
- 35: Stoffstreifen der Spaltabdeckung
- 36: Pfeil
- 37: Stoffüberstand
- 38: Faltenscheitel des Stoffüberstands
- 50: Schürze
- 52: Rahmenstück
- 54: Stoffstreifen
- 56: freies Ende des Rahmenstücks

## Patentansprüche

1. Übergang (5) zwischen zwei gelenkig miteinander verbundener Fahrzeuge (2, 3), wobei der Übergang (5) eine Übergangseinrichtung, z. B. eine Brücke oder Plattform (7) umfasst, die durch mindestens einen Balg tunnelartig umgeben ist, wobei im Bereich der Seitenwand (12) des mindestens einen Balges eine balgartig ausgebildete Spaltabdeckung (30) vorgesehen ist, wobei die Spaltabdeckung (30) mehrere hintereinander angeordnete Spaltabdeckrahmen (32) aufweist, wobei die Spaltabdeckrahmen (32) zur Bildung der balgartigen Spaltabdeckung (30) durch Stoffstreifen (35) verbunden sind,
wobei an der Spaltabdeckung (30) eine in Richtung der Übergangseinrichtung ragende, den Abstand X zwischen Spaltabdeckung (30) und Übergangseinrichtung überbrückende Schürze (50) anbringbar ist
**dadurch gekennzeichnet,**
**dass** die Schürze (50) in der Höhe verstellbar an der Spaltabdeckung angebracht ist.

2. Übergang (5) nach Anspruch 1,
**dadurch gekennzeichnet,**
**dass** die Schürze (50) lösbar an der Spaltabdeckung (30) anbringbar ist.

3. Übergang (5) nach einem der voranstehenden Ansprüche,
**dadurch gekennzeichnet,**
**dass** die Stoffstreifen (35) der Spaltabdeckung (30) in Richtung der Übergangseinrichtung einen frei auskragenden Stoffüberstand (37) bilden, wobei an dem Stoffüberstand (37) die Schürze (50) anbringbar ist.

4. Übergang (5) nach Anspruch 3,
**dadurch gekennzeichnet,**
**dass** die Spaltabdeckung (30) falten- oder wellenbalgartig ausgebildet ist, wobei der Stoffüberstand (37) ebenfalls entsprechend falten- oder wellenbalgartig ausgebildet ist, wobei die Schürze (50) im Bereich der Falten- oder Wellenscheitel (38) des Stoffüberstands (37) an dem Stoffüberstand (37) befestigt ist.

5. Übergang (5) nach Anspruch 4,
**dadurch gekennzeichnet,**
**dass** die Schürze (50) falten- oder wellenbalgartig ausgebildet ist und im Bereich ihrer Falten- oder Wellenscheitel (38) Rahmenstücke (52) zur Verbindung mit dem Stoffüberstand (37) der Spaltabdeckung (30) aufweist, wobei die Rahmenstücke (52) falten- oder wellenbalgartige Stoffstreifen (54) zur Bildung der entsprechend ausgebildeten Schürze (50) aufnehmen.

6. Übergang (5) nach Anspruch 5,
**dadurch gekennzeichnet,**
**dass** die Rahmenstücke (52) die falten- oder wellenbalgartigen Stoffstreifen (54) der Schürze (50) unter Bildung eines freien Endes überragen, wobei die Rahmenstücke (52) mit ihrem freien Ende an den Falten- oder Wellenscheiteln (38) des Stoffüberstandes (37) der Spaltabdeckung (30) angeordnet sind.

7. Übergang (5) nach Anspruch 6,
**dadurch gekennzeichnet,**
**dass** die Rahmenstücke (52) im Querschnitt U-profilförmig ausgebildet sind.

8. Übergang (5) nach einem der Ansprüche 5 bis 7
**dadurch gekennzeichnet,**
**dass** die Stoffstreifen (54) der Schürze (50) aus einem anderen , insbesondere verschleißfesterem Material ausgebildet sind, als die Stoffstreifen (35) der Spaltabdeckung.

9. Übergang (5) nach einem der voranstehenden Ansprüche
**dadurch gekennzeichnet,**
**dass** die Spaltabdeckung (30) an der Seitenwand (12) des mindestens einen Balges angebracht ist.

10. Übergang (5) nach einem der voranstehenden Ansprüche 1 bis 8 **dadurch gekennzeichnet,**
**dass** bei einem Übergang (5) mit einem Innen- und einem Außenbalg, die Spaltabdeckung durch den Innenbalg gebildet ist.

## Claims

1. A communication passage (5) between two articulately connected vehicles (2, 3), wherein the communication passage (5) includes a gangway device, e.g. a bridge or a platform (7), which is enclosed by at least one bellows in a tunnel-like manner, wherein a gap cover (30) formed as a bellows is provided in the area of the lateral wall (12) of the at least one bellows, wherein the gap cover (30) comprises several successively arranged gap cover frames (32), wherein the gap cover frames (32) are connected with each other by fabric strips (35) for forming the bellows-like gap cover (30),
wherein an apron (50) protruding in the direction of the gangway device and bridging the gap X between the gap cover (30) and the gangway device can be attached to the gap cover (30),
**characterized in that**
the apron (50) is attached to the gap cover in such a manner that it is adjustable in height.

2. The communication passage (5) according to claim 1,
**characterized in that**
the apron (50) can be detachably attached to the gap cover (30).

3. The communication passage (5) according to one of the aforementioned claims
**characterized in that**
the fabric strips (35) of the gap cover (30) form a fabric protrusion (37) that freely protrudes in the direction of the gangway device, wherein the apron (50) can be attached to the fabric protrusion (37).

4. The communication passage (5) according to claim 3,
**characterized in that**
the gap cover (30) is designed as a folding or corrugated bellows, wherein the fabric protrusion (37) is also correspondingly designed as a folding or corrugated bellows, wherein the apron (50) is fastened to the fabric protrusion (37) in the area of the apex (38) of the folds or corrugations of the fabric protrusion (37).

5. The communication passage (5) according to claim 4,
**characterized in that**
the apron (50) is designed as a folding or corrugated bellows, and comprises frame parts (52) in the area of the apex (38) of its folds or corrugations for connection with the fabric protrusion (37) of the fold cover (30), wherein the frame parts (52) receive folded or corrugated bellows-like fabric strips (54) for forming the correspondingly designed apron (50).

6. The communication passage (5) according to claim 5,
**characterized in that**
the frame parts (52) protrude over the folded or corrugated bellows-like fabric strips (54) of the apron (50) thus forming a free end, wherein, at their free ends, the frame parts (52) are disposed at the apexes (38) of the folds or corrugations of the fabric protrusion (37) of the gap cover (30).

7. The communication passage (5) according to claim 6,
**characterized in that**
the frame parts (52) have a cross-section shaped as a U-profile.

8. The communication passage (5) according to one of the claims 5 to 7,
**characterized in that**
the fabric strips (54) of the apron (50) are made of another, in particular a more wear-resistant material, than the fabric strips (35) of the gap cover.

9. The communication passage (5) according to one of the aforementioned claims,
**characterized in that**
the gap cover (30) is attached to the lateral wall (12) of the at least one bellows.

10. The communication passage (5) according to one of the aforementioned claims 1 to 8,
**characterized in that**
in a communication passage (5) with an inner bellows and an outer bellows, the gap cover is formed by the inner bellows.

## Revendications

1. Passage d'intercirculation (5) entre deux véhicules (2, 3) reliés de manière articulée, où le passage d'intercirculation (5) comporte un dispositif d'intercirculation, par exemple une passerelle ou une plateforme (7), entouré d'au moins un soufflet en forme de tunnel, où un recouvrement de fente (30) en forme de soufflet est prévu dans la région de la paroi latérale (12) de l'au moins un soufflet, où le recouvrement de fente (30) comporte plusieurs cadres de recouvrement de fente (32) disposés les uns derrière les autres, où les cadres de recouvrement de fente (32) sont connectés par des bandes de tissu (35) pour former le recouvrement de fente (30) en forme de soufflet,
où un tablier (50) faisant saillie en direction du dispositif d'intercirculation et enjambant l'espace X entre le recouvrement de fente (30) et le dispositif d'intercirculation, peut être attaché au recouvrement de fente (30),
**caractérisé en ce que**
le tablier (50) est attaché au recouvrement de fente de manière à être réglable en hauteur.

2. Passage d'intercirculation (5) selon la revendication 1,
**caractérisé en ce que**
le tablier (50) peut être attaché de manière détachable au recouvrement de fente (30).

3. Passage d'intercirculation (5) selon l'une des revendications précédentes,
**caractérisé en ce que**
les bandes de tissu (35) du recouvrement de fente (30) forment une saillie de tissu (37) faisant saillie librement en direction du dispositif d'intercirculation, le tablier (50) pouvant être attaché à la saillie de tissu (37).

4. Passage d'intercirculation (5) selon la revendication 3,
**caractérisé en ce que**
le recouvrement de fente (30) prend la forme d'un soufflet à plis ou ondulé, où la saillie de tissu (37) étant également respectivement en forme de soufflet à plis ou ondulé, où le tablier (50) est fixé à la saillie de tissu (37) dans la région du sommet (38) des plis ou ondulations de la saillie de tissu (37).

5. Passage d'intercirculation (5) selon la revendication 4,
**caractérisé en ce que**
le tablier (50) prend la forme d'un soufflet à plis ou ondulé et comporte des pièces de cadre (52), dans la région des sommets (38) de ses plis ou ondulations, destinées à être connectés à la saillie de tissu (37) du recouvrement de fente (30), où les pièces de cadre (52) reçoivent des bandes de tissu (54) en forme de soufflet à plis ou ondulé pour former le tablier (50) formé de manière correspondante.

6. Passage d'intercirculation (5) selon la revendication 5,
**caractérisé en ce que**
les pièces de cadre (52) font saillie au-dessus des bandes de tissu (54) en forme de soufflet à plis ou ondulé du tablier (50) et forment une extrémité libre, où les pièces de cadre (52) sont disposés avec leur extrémité libre au niveau des sommets (38) des plis ou ondulations de la saillie de tissu (37) du recouvrement de fente (30).

7. Passage d'intercirculation (5) selon la revendication 6,
**caractérisé en ce que**
les pièces de cadre (52) ont une section transversale en forme de profil en U.

8. Passage d'intercirculation (5) selon l'une des revendications 5 à 7, **caractérisé en ce que**
les bandes de tissu (54) du tablier (50) sont constituées d'un autre matériau, en particulier plus résistant à l'usure, que les bandes de tissu (35) du recouvrement de fente.

9. Passage d'intercirculation (5) selon l'une des revendications précédentes,
**caractérisé en ce que**
le recouvrement de fente (30) est attaché à la paroi latérale (12) de l'au moins un soufflet.

10. Passage d'intercirculation (5) selon l'une des revendications précédentes 1 à 8,
**caractérisé en ce que**
dans un passage d'intercirculation (5) avec un soufflet intérieur et un soufflet extérieur, le recouvrement de fente est formé par le soufflet intérieur.
